# EUROPÄISCHE PATENTSCHRIFT

(11) **EP 1 686 307 B1**
(45) Veröffentlichungstag und Bekanntmachung des Hinweises auf die Patenterteilung: **08.08.2007**
(21) Anmeldenummer: 05027264.0
(22) Anmeldetag: 14.12.2005
(51) Int. Cl.: F16L 41/08

(54) **Abzweigverbindung.**
Branch connection.
Branchement de dérivation.

(30) Priorität: 04.01.2005 DE 102005001301
(43) Veröffentlichungstag der Anmeldung: 02.08.2006
(73) Patentinhaber: Hansgrohe AG, 77761 Schiltach (DE)
(72) Erfinder: Gross, Jürgen, 77790 Steinach (DE)
(74) Vertreter: Schöndorf, Jürgen

(56) Entgegenhaltungen:
- EP-A- 0 318 744
- EP-A- 0 603 775
- EP-A- 1 285 621
- ES-T- 2 013 973

## Beschreibung

Die vorliegende Anmeldung betrifft eine Anordnung zum Anbringen eines Sanitärelements an einem Rohr gemäss dem Oberbegriff des Anspruchs 1.

Duschanlagen werden immer aufwändiger, so dass man sogar schon von Duschsystemen reden kann. Neben den herkömmlichen Handbrausen und Kopfbrausen werden auch Seitenbrausen gewünscht, die mit geringem Platzbedarf installiert werden sollen. Beispielsweise werden die Seitenbrausen an Rohren angebracht, durch die gleichzeitig auch die Wasserführung zu der Seitenbrause erfolgt. Rohre haben die Eigenschaft, dass man an die Rückseite einer Öffnung, in der die Seitenbrause angebracht werden soll, nur schwer herankommt.

ES 2013973 T beschreibt eine Anordnung zum Anbringen eines Sanitärelements an einem Rohr gemäss dem Oberbegriff des Anspruchs 1.

EP 0318744 A beschreibt eine Vorrichtung zum flüssigkeitsdichten Verbinden zweier Rohre.

Der Erfindung liegt die Aufgabe zu Grunde, eine Möglichkeit zu schaffen, ein Sanitärelement mit geringem Aufwand an einer Stelle anzubringen, wo man an die Rückseite der Öffnung in das Wasser führende System nicht herankommen kann.

Zur Lösung dieser Aufgabe schlägt die Erfindung eine Anordnung mit den im Anspruch 1 genannten Merkmalen vor. Weiterbildungen der Erfindung sind Gegenstand von Unteransprüchen.

Die Anordnung sieht nun also so aus, dass ein Anschlusselement vorgesehen wird, das mit dem Rohr verbunden wird. Nach Verbindung des Anschlusselements mit dem Rohr wird dann das Sanitärelement mit Hilfe eines Verbindungsnippels mit dem Anschlusselement verbunden. Dabei kann der Verbindungsnippel auch dazu dienen, eine endgültige Festlegung des Anschlusselements an dem Rohr zu bewirken.

Zur Festlegung des Anschlusselements kann in Weiterbildung vorgesehen sein, dass der Anschlussnippel mindestens eine an der Rückseite des Lochrands angreifende Rastnase aufweist. Diese Rastnase federt beim Anbringen des Anschlussnippels zurück und greift dann, wenn der Anschluss Nippel seine korrekte Position erreicht hat, hinter den Lochrand. Der später mit dem Anschlussnippel verbundene Verbindungsnippel kann dann dazu dienen, das Zurückfedern der Rastnase zu blockieren.

Insbesondere kann vorgesehen sein, dass die Rastnase an einer Rastzunge ausgebildet ist, die nach innen federnd ausgebildet ist.

In Weiterbildung der Erfindung kann die Außenhülse, die dem Anschlussnippel außen umgibt, eine Anlageschulter für den Anschlussnippel aufweisen, die der Anlagefläche der Außenhülse für das Rohr entgegengesetzt orientiert ist.

In nochmaliger Weiterbildung der Erfindung kann vorgesehen sein, dass der Anschlussnippel eine Steckbuchse für den Verbindungsnippel bildet oder aufweist. Insbesondere kann diese Steckbuchse in Zusammenwirken mit dem Verbindungsnippel eine Bajonetteinrichtung aufweisen.

Die Erfindung schlägt in Weiterbildung vor, den Verbindungsnippel und/oder den Anschlussnippel derart auszubilden, dass der Verbindungsnippel in eingesetztem Zustand mindestens bis in das Loch im Rohr reicht. Dies führt nicht nur zu der maximal möglichen Verbindungslänge zwischen Anschlussnippel und Verbindungsnippel, sondern dient auch dazu, das Zurückfedern der Rastzungen zu verhindern.

Besonders günstig ist es, wenn der Anschlussnippel zwei Rastnasen bzw. zwei Rastzungen aufweist, die einander diametral gegenüberliegend angeordnet sind.

Erfindungsgemäß kann bei im Querschnitt kreisrunden oder ovalen Rohren in Weiterbildung vorgesehen sein, dass die Verbindung zwischen der Außenhülse und dem Anschlussnippel derart ausgebildet ist, dass die Rastnasen des Anschlussnippels an der Stelle der Außenhülse angeordnet sind, wo diese ihre geringste Erstreckung in ihrer eigenen Axialrichtung aufweist. Da die zur Anlage an der Oberfläche des Rohrs bestimmte Anlagefläche der Außenhülse der Oberfläche des üblicherweise kreiszylindrischen Rohrs angepasst ist, gibt es eine Stelle der geringsten axialen Erstreckung der Hülse. An dieser Stelle sind die Rastnasen dann angeordnet.

Zur weiteren Verbesserung kann erfindungsgemäß vorgesehen sein, dass in den Anschlussnippel eine Innenhülse einschiebbar ist, um die Rastzungen nach Einsetzen des Anschlussnippels in das Loch des Rohrs zu blockieren. Zwar sind die Rastzungen bei eingesetztem Verbindungsnippel durch diesen am Zurückfedern gehindert, jedoch bietet die von der Erfindung vorgeschlagene Anordnung ja die Möglichkeit, den Verbindungsnippel aus der Bajonetteinrichtung wieder zu lösen und herauszuziehen. Damit auch in diesem Zustand das Anschlusselement am Rohr verbleiben kann und dort sicher festgelegt ist, kann die Innenhülse dann die Aufgabe des Blockierens der Rastnasen übernehmen.

Es kann erfindungsgemäß vorgesehen sein, dass die Innenhülse beim Einschieben des Verbindungsnippel nach vorne geschoben wird, bis sie ihre korrekte Position einnimmt.

Die Erfindung schlägt vor, den Anschlussnippel, die Außenhülse und die Innenhülse als Baueinheit vorzukonfektionieren. Dabei ist die Innenhülse noch am äußeren Ende der Steckbuchse angeordnet, um bei der Montage das Zurückfedern der Rastzungen nicht zu behindern.

Der Verbindungsnippel kann an seinem aus dem Anschlusselement heraus ragenden Ende ein Kugelgelenk zum Anbringen einer Seitenbrause aufweisen. Es ist jedoch auch möglich, dass der Verbindungsnippel in einen Anschlussbogen zum Anschluss eines Schlauchs oder dergleichen übergeht.

Die von der Erfindung vorgeschlagene Anordnung wird folgendermaßen verwendet. In ein Rohr wird ein Loch an der Stelle gebohrt, wo eine Seitenbrause oder ein sonstiges Sanitärelement zu befestigen ist. In das Loch wird dann der mit den Rastzungen versehene vorspringende Teil des Anschlusselements eingedrückt, bis die dem Rohr zugeordnete Anlagefläche der Außenhülse an der Außenseite des Rohrs anliegt. Dabei greifen dann die Rastzungen mit ihren Rastnasen hinter den Rand des Lochs. In einem Raum zwischen dem Anschlussnippel und der Außenhülse ist eine Formdichtung eingelegt, die dann gleichzeitig in ihre korrekte Position gebracht wird. Nach diesem Anbringen des Anschlusselements wird der Verbindungsnippel in die Steckbuchse eingeführt, wobei er die Innenhülse nach vorne schiebt. Dann wird der Verbindungsnippel gedreht, um die Bajonetteinrichtung in Eingriff zu bringen. Damit ist die Montage erfolgt. Der Verbindungsnippel kann auch wieder gelöst werden, wobei die Innenhülse dann dafür sorgt, dass das Anschlusselement mit dem Rohr verbunden bleibt.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: einen Schnitt durch eine an einem Rohr angebrachte Seitenbrause;
- Figur 2: in einer Explosionsdarstellung die Einzelteile der Anordnung der Figur 1;
- Figur 3: einen Schnitt durch das Anschlusselement der Anordnung der Figur 1 als Baueinheit.

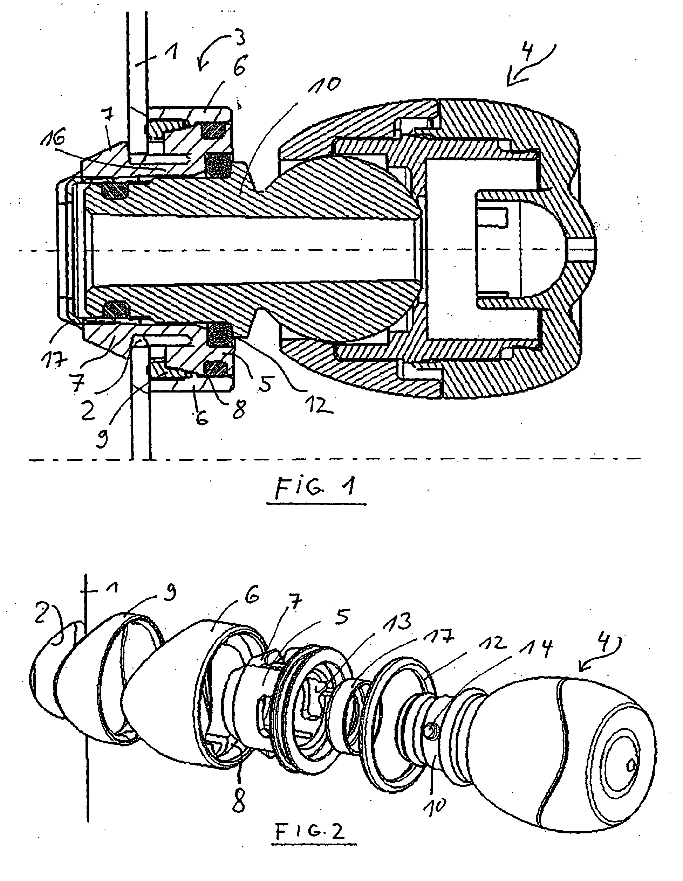

In dem Schnitt der Figur 1 ist die Wand 1 eines Rohrs zu sehen, in der ein Loch 2 gebohrt ist. Im Bereich des Lochs 2 ist mit dem Rohr 1 ein Anschlusselement 3 verbunden, das zur Anbringung einer Seitenbrause 4 dient. Das Anschlusselement 3 enthält einen Anschlussnippel 5, der außen von einer Außenhülse 6 umgeben ist. Der Anschlussnippel 5 weist zwei Rastzungen 16 auf, die im Bereich ihres freien Endes mit einer Rastnase 7 versehen sind. Diese beiden Rastzungen 16 sind einander diametral gegenüber liegend angeordnet. Die Orientierung des Anschlussnippels 5 und der Außenhülse 6 ist so ausgerichtet, dass die Rastzungen 16 mit ihren Rastnasen 7 längs einer Linie ausgerichtet sind, die in Längsrichtung des Rohrs 1 verläuft. An dieser Stelle hat die Außenhülse 6 ihre geringste Erstreckung in axialer Richtung, siehe auch Figur 2. Die dem Rohr zugewandte Anlagefläche der Außenhülse 6 liegt überall glatt an der Oberfläche des Rohrs 1 an. Die Außenhülse 6 weist ebenfalls eine Anlageschulter 8 auf, die der Anlagefläche zum Rohr abgewandt ist. Diese Anlageschulter 8 ist ebenfalls in Figur 2 zu sehen. Die Anlageschulter 8 begrenzt das Einschieben des Anschlussnippels 5 in die Außenhülse 3, wie dies in Figur 1 dargestellt ist. Zwischen der Außenhülse 6 und der radialem Außenseite des Anschlussnippels 5 ist eine Dichtung 9 angeordnet, die zum Teil in einer V- förmigen Nut untergebracht ist. Diese Dichtung 9 weist eine Form auf, die etwa der Form der Außenhülse 6 entspricht, jedoch in axialer Richtung kürzer ausgebildet ist.

In den Anschlussnippel 5 ist ein Verbindungsnippel 10 eingesetzt, der mit einem Flansch 11 auf einer Dichtung 12 aufliegt, die in einer umlaufenden Ausnehmung des Anschlussnippels 5 untergebracht ist. Die Innenseite des Anschlussnippels 5 bildet eine Steckbuchse für den Verbindungsnippel 10, wobei in dieser Steckbuchse eine Bajonettausnehmung 13 angeordnet ist, siehe Figur 2, mit der ein Bajonettvorsprung 14 des Verbindungsnippels 10 zusammenwirkt.

Im Bereich des innerhalb des Rohrs 1 angeordneten Endes des Anschlussnippels 5 ist zwischen dem vorderen Ende des Verbindungsnippels 10 und den Rastzungen 16 eine Innenhülse 17 angeordnet, die ein Zurückfedern der Rastzungen 16 nach innen verhindern sollen, und zwar insbesondere für den Fall, dass der Verbindungsnippel 10 wieder aus dem Anschlusselement 3 herausgenommen wird.

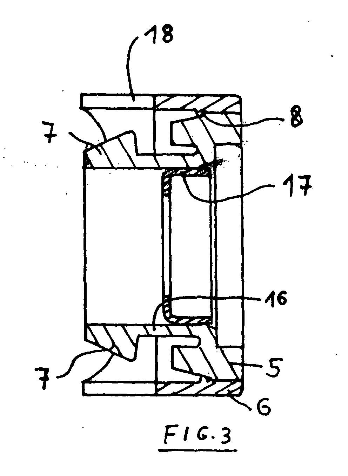

Figur 3 zeigt, wie die Außenhülse 3, der Anschlussnippel 5 und die Innenhülse 17 vor dem Anbringen an dem Rohr 1 zusammengesetzt werden. Zwischen der Außenhülse 3 und dem Anschlussnippel 5 wird zunächst noch die Dichtung 9 eingelegt, was in Figur 3 nicht dargestellt ist. Anschließend wird dieses Anschlusselement der Oberfläche des Rohrs angenähert und dagegen gedrückt, wobei dann die Rastnasen 7 nach innen federn, bis sie an der Rückseite der Rohrwandung zur Anlage kommen. Durch die Form der dem Rohr zugewandten Anlagefläche 18 der Außenhülse 6 erfolgt eine Selbstzentrierung. Nach dieser Anbringung wird dann der Verbindungsnippel 10 in Figur 3 von rechts eingeschoben, wobei er dann die Innenhülse 17 vor sich her schiebt, bis diese an der Rückseite der Rastnasen 7 positioniert ist.

## Patentansprüche

1. Anordnung zum Anbringen eines Sanitärelements an einem Rohr (1), mit
1.1 einem Anschlusselement (3), das
1.2 einen zum Einsetzen in ein Loch (2) des Rohrs (1) bestimmten Anschlussnippel (5),
1.3 eine den Anschlussnippel (5) umgebende Außenhülse (6), und
1.4 eine Dichtung (9) aufweist, sowie mit
1.5 einem in den Anschlussnippel (5) einsetzbaren Verbindungsnippel (10), der
1.6 einen Teil des Sanitärelements bildet oder mit diesem verbunden ist, **dadurch gekennzeichnet daß** die Außenhülse (6) eine den Anschlussnippel (5) umgebende Anlagefläche (18) zur Anlage an dem Rohr (1) außenhalb des Lochs (2) aufweist.

2. Anordnung nach Anspruch 1, bei der der Anschlussnippel (5) mindestens eine an der Rückseite der Lochwandung angreifende Rastnase (7) aufweist.

3. Anordnung nach Anspruch 2, bei der die Rastnase (7) an einer Rastzunge (16) ausgebildet ist, die nach innen federnd ausgebildet ist.

4. Anordnung nach einem der vorhergehenden Ansprüche, bei der die Außenhülse (6) eine Anlageschulter (8) für den Anschlussnippel (5) aufweist, die der zur Anlage an das Rohr (1) bestimmten Anlagefläche (18) entgegengesetzt orientiert ist.

5. Anordnung nach einem der vorhergehenden Ansprüche, bei der der Anschlussnippel (5) eine Steckbuchse für den Verbindungsnippel (10) bildet.

6. Anordnung nach Anspruch 5, bei der die Steckbuchse eine Bajonetteinrichtung aufweist.

7. Anordnung nach einem der vorhergehenden Ansprüche, bei der der Verbindungsnippel (10) und/oder die Steckbuchse derart ausgebildet sind, dass der Verbindungsnippel (10) in eingesetztem Zustand mindestens bis in das Loch (2) im Rohr (1) reicht.

8. Anordnung nach einem der Ansprüche 2 bis 7, bei der der Anschlussnippel (5) zwei diametral angeordnete Rastnasen (7) aufweist.

9. Anordnung nach einem der vorhergehenden Ansprüche, bei der die Verbindung zwischen der Außenhülse (6) und dem Anschlussnippel (5) derart ausgebildet ist, dass die Rastnasen (7) des Anschlussnippels (5) an der Stelle der geringsten axialen Erstreckung der Außenhülse (6) liegen.

10. Anordnung nach einem der vorhergehenden Ansprüche, mit einer in den Anschlussnippel (5) einschiebbaren Innenhülse (17) zum Blockieren der Rastzungen (16) nach Einschieben des Anschlussnippels (5) in das Loch (2) des Rohrs (1).

11. Anordnung nach Anspruch 10, bei dem die Innenhülse (17) durch das Einschieben des Verbindungsnippel (10) in die Steckbuchse in die richtige Position verschiebbar ist.

12. Anordnung nach einem der vorhergehenden Ansprüche, bei dem der Anschlussnippel (5), die Außenhülse (6) und gegebenenfalls die Innenhülse (17) als Baueinheit vorkonfektionierte sind.

13. Anordnung nach einem der vorhergehenden Ansprüche, bei der der Verbindungsnippel (10) ein Kugelgelenk zum Anbringen einer Seitenbrause aufweist.

14. Anordnung nach einem der Ansprüche 1 bis 12, bei der der Verbindungsnippel einen Schlauchanschluss aufweist.

## Claims

1. An arrangement for fitting a sanitary element on a pipe (1), with
1.1 a connection element (3) that features
1.2 a connection nipple (5) meant to be fitted in a mounting hole (2) of said pipe (1),
1.3 an outer sleeve (6) enclosing said connection nipple (5), and
1.4 a seal (9), as well as
1.5 a connection nipple (10) that may be fitted inside the connection nipple (5), which
1.6 forms a part of the sanitary element or is connected with it, **characterised in that** said outer sleeve (6) features a contact surface (18) enclosing said connection nipple (5) for adjoining the pipe (1) outside said mounting hole (2).

2. An arrangement according to Claim 1, wherein the connection nipple (5) features at least one lug (7) engaging on the rear side of the mounting-hole wall.

3. An arrangement according to Claim 2, wherein the lug (7) is formed on a tongue (16) that springs inwards.

4. An arrangement according to one of the preceding claims, wherein the outer sleeve (6) features a support shoulder (8) for the connection nipple (5), which is oriented opposite the contact surface (18) meant to adjoin the pipe (1).

5. An arrangement according to one of the preceding claims, wherein the connection nipple (5) forms a socket connector for the connection nipple (10).

6. An arrangement according to Claim 5, wherein the connecting socket is provided with a bayonet-coupling mechanism.

7. An arrangement according to one of the preceding claims, wherein the connection nipple (10) and/or the socket connector are/is formed such that the connection nipple (10) in the installed state extends at least into the mounting hole (2) inside the pipe (1).

8. An arrangement according to one of Claims 2 to 7, wherein the connection nipple (5) features two diametrically located lugs (7).

9. An arrangement according to one of the preceding claims, wherein the connection between the outer sleeve (6) and the connection nipple (5) is formed such that the lugs (7) of the connection nipple (5) lie on the point of minimum axial extension on the outer sleeve (6).

10. An arrangement according to one of the preceding claims, with an internal sleeve (17) that can be pushed inside the connection nipple (5) for blocking the tongues (16) after fitting in the connection nipple (5) inside the mounting hole (2) of the pipe (1).

11. An arrangement according to Claim 10, wherein the internal sleeve (17) can be pushed in the right position by pushing in the connection nipple (10) inside the socket connector.

12. An arrangement according to one of the preceding claims, wherein the connection nipple (5), the outer sleeve (6) and, if necessary, the internal sleeve (17) are pre-assembled together as one unit.

13. An arrangement according to one of the preceding claims, wherein the connection nipple (10) features a ball joint for attaching a side shower outlet.

14. An arrangement according to one of claims 1 to 12 wherein the connection nipple features a hose connector.

## Revendications

1. Configuration permettant de fixer un élément sanitaire contre un tuyau (1), comprenant
1.1 un élément de raccordement (3) présentant
1.2 un nipple de raccordement (5) destiné à être introduit dans un trou (2) du tuyau (1),
1.3 une douille extérieure (6) entourant le nipple de raccordement (5), et
1.4 un joint (9) ainsi que
1.5 un nipple de liaison (10) insérable dans le nipple de raccordement (5), le nipple (10)
1.6 faisant partie de l'élément sanitaire ou étant relié à celui-ci, **caractérisée en ce que** la douille extérieure (6) présente une surface d'applique (18) entourant le nipple de raccordement (5), surface reposant contre le tuyau (1) à l'extérieur du trou (2).

2. Configuration selon la revendication 1, dans laquelle le nipple de raccordement (5) présente au moins une saillie de crantage (7) ayant prise à l'arrière de la paroi du trou.

3. Configuration selon la revendication 2, dans laquelle la saillie de crantage (7) est formée contre une languette de crantage (16) configurée pour effectuer un mouvement élastique vers l'intérieur.

4. Configuration selon l'une quelconque des revendications précédentes, dans laquelle la douille extérieure (6) présente un épaulement d'applique (8) pour le nipple de raccordement (5), épaulement qui est orienté dans le sens opposé de la surface d'applique (18) destinée à reposer contre le tuyau (1).

5. Configuration selon l'une quelconque des revendications précédentes, dans laquelle le nipple de raccordement (5) forme une douille enfichable pour le nipple de liaison (10).

6. Configuration selon la revendication 5, dans laquelle la douille enfichable présente un dispositif à baïonnettes.

7. Configuration selon l'une quelconque des revendications précédentes, dans laquelle le nipple de liaison (10) et/ou la douille enfichable présentent une géométrie telle que le nipple de liaison (10) pénètre, lorsqu'il est en place, au moins jusque dans le trou (2) du tuyau (1).

8. Configuration selon l'une quelconque des revendications 2 à 7, dans laquelle le nipple de raccordement (5) présente deux saillies de crantage (7) diamétralement opposées.

9. Configuration selon l'une quelconque des revendications précédentes, dans laquelle la liaison entre la douille extérieure (6) et le nipple de raccordement (5) est configurée de sorte que les saillies de crantage (7) du nipple de raccordement (5) se trouvent à l'endroit où la douille extérieure (6) présente la plus faible extension axiale.

10. Configuration selon l'une quelconque des revendications précédentes, avec une douille intérieure (17) enfichable dans le nipple de raccordement (5) pour bloquer les languettes de crantage (16) après avoir introduit le nipple de raccordement (5) dans le trou (2) du tuyau (1).

11. Configuration selon la revendication 10, dans laquelle la douille intérieure (17), grâce à l'introduction du nipple de liaison (10) dans la douille enfichable, peut être déplacée dans la bonne position.

12. Configuration selon l'une quelconque des revendications précédentes, dans laquelle le nipple de raccordement (5), la douille extérieure (6) et le cas échéant la douille intérieure (17) ont été préconfectionnés sous forme de module.

13. Configuration selon l'une quelconque des revendications précédentes, dans laquelle le nipple de liaison (10) présente une articulation à rotule destinée à fixer une pomme de douche latérale.

14. Configuration selon l'une quelconqonque des revendications 1 à 12, dans laquelle le nipple de liaison présente un raccord de flexible.
